# EUROPÄISCHE PATENTSCHRIFT

(11) **EP 0 945 242 B1**
(45) Veröffentlichungstag und Bekanntmachung des Hinweises auf die Patenterteilung: **23.04.2003**
(21) Anmeldenummer: 99103849.8
(22) Anmeldetag: 27.02.1999
(51) Int. Cl.: B29C 45/00, B29C 45/17

(54) **Fertigungszelle**
Manufacturing cell
Cellule de fabrication

(30) Priorität: 09.03.1998 DE 29804085 U
(43) Veröffentlichungstag der Anmeldung: 29.09.1999
(73) Patentinhaber: Battenfeld GmbH, D-58540 Meinerzhagen (DE)
(72) Erfinder: Bleier, Harald, Ing., 2700 Wiener Neustadt (AT); Ganz, Martin, 2801 Katzelsdorf (AT)

(56) Entgegenhaltungen:
- WO-A-97/07955
- US-A- 4 934 920
- PATENT ABSTRACTS OF JAPAN vol. 013, no. 223 (M-829), 24. Mai 1989 (1989-05-24) & JP 01 038215 A (FANUC LTD), 8. Februar 1989 (1989-02-08)
- PATENT ABSTRACTS OF JAPAN vol. 014, no. 029 (M-922), 19. Januar 1990 (1990-01-19) & JP 01 269512 A (TOSHIBA CORP), 27. Oktober 1989 (1989-10-27)
- "ENTNEHEMEN UND PRUEFEN MIT EINEM SCHNELLEN HANDHABUNGSGERAET" KUNSTSTOFFE,DE,CARL HANSER VERLAG. MUNCHEN, Bd. 80, Nr. 8, 1. August 1990 (1990-08-01), Seite 894 XP000150775 ISSN: 0023-5563

## Beschreibung

Die Erfindung bezieht sich auf eine Fertigungszelle zum Spritzgießen von Klein- und Kleinstteilen.

Beim Spritzgießen von Kunststoff-Formteilen ist es bekannt, unterschiedliche Aufgaben, wie Spritzen, Entformen, Kontrollieren, etc., automatisiert zu vereinen, zu welchem Zweck Handhabungsautomaten eingesetzt werden. Der Roboter entformt beispielsweise fertig spritzgegossene Kunststoff-Formteile aus dem Werkzeug und transportiert sie zu einer Qualitätssicherungsstation. Von dort aus gelangen sie, beispielsweise über ein Förderband, an einen anderen Ort, wo die Teile verpackt werden.

In jüngerer Zeit ist der Bedarf aufgetreten, Spritzgießformteile mit besonders kleinen Ausmaßen herzustellen. Hier sind mikro-mechanische Bauteile (z. B. Mikrozahnräder für Kleinstpumpen), medizintechnische Kleinteile und optoelektronische Elemente (z. B. Teile für Lichtleiter) als Beispielbauteile zu nennen, bei denen die Herstellung mit klassischen Spritzgießmaschinen in der bekannten Weise für Herstellung und Handhabung Probleme bereitet.

Beim Spritzgießen von kleinen und kleinsten Formteilen ergeben sich neue Probleme, die bei Formteilen üblicher Größenordnung nicht auftreten. Kleinstteile können sich beispielsweise elektrostatisch aufladen, was zu unerwünschten Effekten bei den Arbeitsschritten führt, die sich an das eigentliche Spritzgießen anschließen. Weiterhin ergibt sich das Problem, daß die Formteile so gehandhabt werden, daß Beschädigungen durch das Handling vermieden werden.

Bei dieser Fertigungsaufgabe ergeben sich also Schwierigkeiten im Zusammenhang mit den Schnittstellen zwischen den einzelnen an sich bekannten Arbeitsstationen. Um diese Schnittstellenprobleme zu verhindern, ist es möglich, besondere Vorkehrungen an den Schnittstellen zu treffen, was jedoch zu Zykluszeitverlängerungen führen kann, die sich wirtschafltich nachteilig auswirken. Hier ist insbesondere an Maßnahmen zu denken, die für einen sichereren Transport der fertigen Teile von einer Station zur anderen ergriffen werden können, was jedoch die Transportgeschwindigkeit der Teile verringern kann.

Aus der WO-A-97 07 955 ist eine Anlage bekannt, bei der sich eine Entnahmevorrichtung für fertig geformte Spritzgießteile und eine Verpackungsvorrichtung unter einer gemeinsamen Abdeckung befinden, die Reinraumverhältnisse ermöglicht.

Der Erfindung liegt daher die Aufgabe zugrunde, eine verbesserte Fertigungszelle für das Spritzgießen von Klein- und Kleinstformteilen zu schaffen, die einen optimierten Spritzgießprozeß ermöglicht, wobei die notwendigen Peripherieprozesse integriert sind.

Die Lösung dieser Aufgabe durch die Erfindung weist folgende Merkmale auf
- eine an sich bekannte Spritzgießvorrichtung (2) mit einer Kunststoff-Plastifizier- und -Einspritzvorrichtung (3), einer Werkzeugöffnungs- und Schließvorrichtung (4) und einem Spritzgießwerkzeug (5), wobei das Spritzgießwerkzeug (5) aus einer festen Werkzeughälfte (6) und mindestens einer verschieblichen Werkzeughälfte (7) besteht,
- eine Vorrichtung (8) zum Verschieben und/oder Drehen der mindestens einen verschieblichen Werkzeughälfte (7), womit diese wechselweise von der Spritzposition in eine Entnahmeposition gebracht werden kann,
- eine Entnahmevorrichtung (9) für fertig geformte Spritzgießteile, die aus der sich in der Entnahmeposition befindlichen Werkzeughälfte (7) die fertigen Spritzgießteile entnimmt,
- eine Qualitätssicherungsvorrichtung (10) und
- eine Verpackungsvorrichtung (11),
wobei alle genannten Vorrichtungen (2, 8, 9, 10, 11) auf einem einzigen Maschinenchassis (12) angeordnet sind und sich unter einer gemeinsamen Abdeckung (13) befinden.

Erfindungsgemäß ist also vorgesehen, daß alle relevanten Fertigungsstationen unter einer gemeinsamen Abdeckung auf einem gemeinsamen Maschinenchassis angeordnet sind. Dadurch ergibt sich eine Vereinfachung bei der Handhabung der spritzgegossenen Teile vom Spritzen über das Entformen, Kontrollieren bis zum lageorientierten Verpacken. Dadurch ist eine Beschädigung oder Verschmutzung der Spritzlinge ausge-schlossen.

Fortbildungsgemäß ist vorgesehen, daß die Qualitätssicherungsvorrichtung (10) Mittel aufweist, mit denen Gutteile von Schlechtteilen selektiert werden können. Hier ist insbesondere an ein computergesteuertes Kamerasystem gedacht, mit dem eine automatische Qualitätsbeurteilung und Selektion erfolgen kann.

Weiterhin ist vorgesehen, daß die Verpackungsvorrichtung (11) Mittel zum Führen einer Blisterverpackung (14) aufweist, in die die fertig spritzgegossenen Teile lageorientiert eingebracht werden. Eine Blisterverpackung eignet sich besonders gut für die Verpackung kleiner Teile, die in großen Stückzahlen hergestellt werden. Dabei werden die fertigen Teile in tiefgezogene Ausformungen eines Kunststoffstreifens eingelegt und gegebenenfalls mit einem Abdeckstreifen verschlossen.

Um die Fertigung und Handhabung unter möglichst sauberen Fertigungsbedingungen zu ermöglichen, ist schließlich vorgesehen, daß die Abdeckung (13) durch Anschluß an Filter- und Ventilatorelemente Reinraumverhältnisse ermöglicht. Dadurch wird für eine saubere Atmosphäre unter der Abdeckung gesorgt.

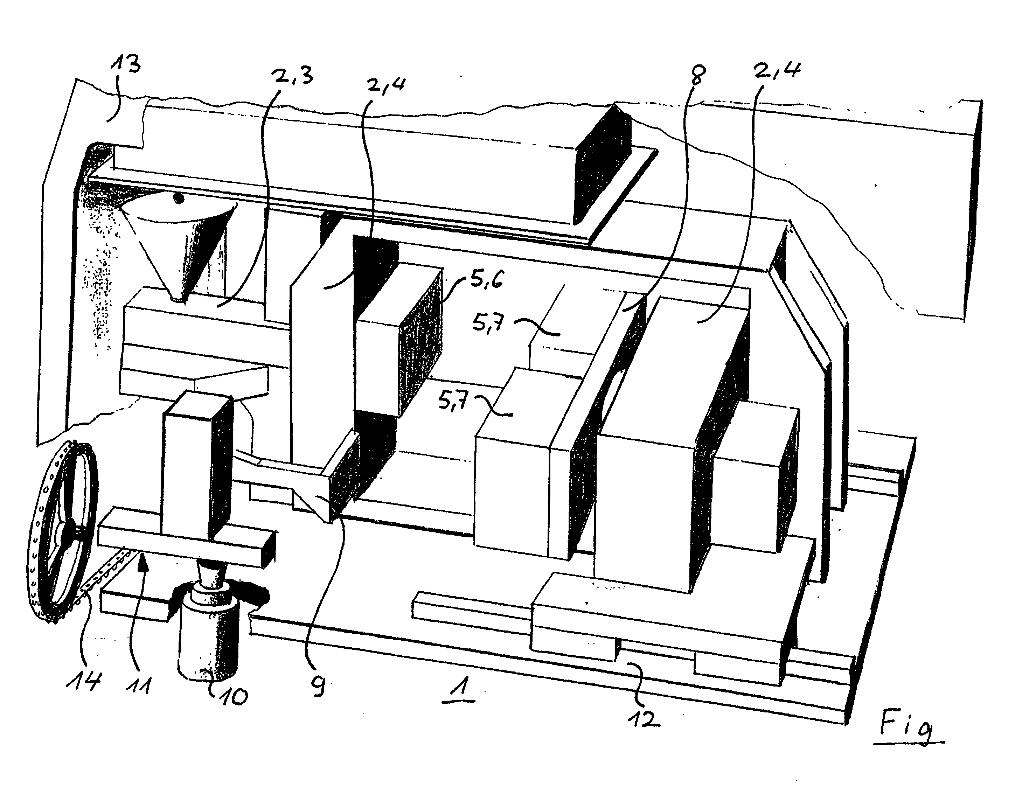

In der Zeichnung ist ein Ausführungsbeispiel der Erfindung dargestellt. Die Figur zeigt schematisch in dreidimensionaler Ansicht eine erfindungsgemäß ausgebildete Spritzgieß-Fertigungszelle.

Die Fertigungszelle 1 zum Spritzgießen von kleinen und kleinsten vorzugsweise aus Kunststoffen bestehenden Teilen besteht aus mehreren Einzelvorrichtungen, die auf einem gemeinsamen Maschinenchassis 12 angeordnet sind. Es ist auch möglich, daß Metalle, Keramik oder ähnliche Materialien gespritzt werden.

Die Spritzgießvorrichtung 2 weist eine Kunststoff-Plastifizier- und -Einspritzvorrichtung 3 auf, in der Kunststoffgranulat oder -pulver plastifiziert und in ein Spritzgießwerkzeug 5 eingespritzt wird. Das Werkzeug 5 wird durch eine Werkzeugöffung- und -Schließvorrichtung 4 geöffnet und geschlossen. Wenngleich im Ausführungsbeispiel eine 'klassische' Spritzgießvorrichtung vorgesehen ist, ist es auch denkbar, daß - gerade bei sehr kleinen Formteilen - eine einfachere Ausführung eingesetzt werden kann: Das Werkzeug 5 kann beispielsweise alleine durch die Düsenandruckkraft geschlossen werden, was eine separate Öffnungs- und Schließvorrichtung entbehrlich macht.

Das Werkzeug 5 besteht aus einer festen Werkzeughälfte 6 und mindestens einer verschieblichen Werkzeughälfte 7, wobei im Ausführungsbeispiel jedoch zwei verschiebliche Werkzeughälften 7 vorgesehen sind. Damit wird es möglich, daß der Spritzgießprozeß stattfindet, während gleichzeitig eine Entformung fertiger Spritzgießteile erfolgt. Zu diesem Zweck ist eine Verschiebe- und/oder Drehvorrichtung 8 für die verschieblichen Werkzeughälften 7 vorgesehen, die die verschieblichen Hälften 7 jeweils entweder in die Spritzgießposition oder in die Entformungsposition bewegt.

Fertig gespritzte Formteile werden, wenn sich die verschiebliche Werkzeughälfte 7 in der Entformungsposition befindet, mittels einer Entnahmevorrichtung 9 aus dem Werkzeug entnommen, was vorzugsweise in lageorientierter Weise erfolgt. Hierfür kommen übliche und bekannte Entnahmeroboter in Frage, die - wegen der geringen Größe und des geringen Gewichts der Teile - beispielsweise pneumatisch arbeiten.

Die Entnahmevorrichtung 9 verbringt die Teile zu einer Qualitätssicherungsvorrichtung 10. Diese kann beispielsweise eine Kamera sein, die computergesteuert und automatisch eine Sichtkontrolle der Teile vornimmt und entscheidet, ob es sich um ein Gutteil oder um ein Ausschußteil (Schlechtteil) handelt. Die Ausschußteile können in üblicher Weise automatisiert ausgesondert werden.

Von der Qualitätssicherungsvorrichtung 10 gelangen mittels der Entnahmevorrichtung 9 die fertigen und für gut befundenen Teile zu einer Verpackungsvorrichtung 11, in der sie in geeigneter Weise verpackt werden. Für kleine Formteile, die unter Umständen nur wenige Milligramm wiegen und Abmessungen im Millimeterbereich oder darunter aufweisen können, empfiehlt sich vorzugsweise die Verpackung in sog. Blister. Dies sind tiefgezogene. Kunststoffstreifen, in die Aufnahmeaushöhlungen für die zu verpackenden Teile eingebracht sind. Diese Blisterverpackungen 14 können - wie in der Figur schematisch zu sehen ist - auf einem Trägerrad aufgewickelt sein und in die Verpackungsstation 11 zugeführt werden. Die Blisterverpackungen oder dergleichen weisen den Vorteil auf, daß die weitere Verarbeitung bzw. Montage der spritzgegossenen Teile vereinfacht werden kann.

Damit die Fertigung der Klein- und Kleinstteile unter möglichst reinen Umweltbedingungen erfolgt, ist eine gemeinsame Abdeckung 13 vorgesehen. Diese kann - wie nicht näher dargestellt ist - an Filter- und Ventilatorelemente angeschlossen sein, so daß sich Reinraumbedingungen unter der Abdeckung 13 ergeben.

Mit der erfindungsgemäßen Fertigungszelle vereinfacht und verbilligt sich die Produktion kleiner und kleinster Spritzgießformteile erheblich: Der Transport der gespritzten Teile durch die verschiedenen Stationen wird leichter und sicherer. Weiterhin werden die verschiedenen notwendigen Stationen auf kleinstem Raum vereinigt.

### Bezugszeichenliste:

- 1: Fertigungszelle
- 2: Spritzgießvorrichtung
- 3: Kunststoff-Plastifizier- und -Einspritzvorrichtung
- 4: Werkzeugöffnungs- und Schießvorrichtung
- 5: Spritzgießwerkzeug
- 6: feste Werkzeughälfte
- 7: verschiebliche Werkzeughälfte
- 8: Verschiebe- und/oder Drehvorrichtung für die verschiebliche Werkzeughälfte
- 9: Entnahmevorrichtung
- 10: Qualitätssicherungsvorrichtung
- 11: Verpackungsvorrichtung
- 12: Maschinenchassis
- 13: Abdeckung
- 14: Blisterverpackung

## Patentansprüche

1. Fertigungszelle (1) zum Spritzgießen von Klein- und Kleinstteilen bestehend aus
- einer Spritzgießvorrichtung (2) mit einer Kunststoff-Plastifizier- und -Einspritzvorrichtung (3) und einem Spritzgießwerkzeug (5), wobei das Spritzgießwerkzeug (5) aus einer festen Werkzeughälfte (6) und mindestens einer verschieblichen Werkzeughälfte (7) besteht,
- einer Vorrichtung (8) zum Verschieben und/oder Drehen der mindestens einen verschieblichen Werkzeughälfte (7), womit diese wechselweise von der Spritzposition in eine Entnahmeposition gebracht werden kann,
- einer Entnahmevorrichtung (9) für fertig geformte Spritzgießteile, die aus der sich in der Entnahmeposition befindlichen Werkzeughälfte (7) die fertigen Spritzgießteile entnimmt,
- einer Qualitätssicherungsvorrichtung (10) und
- einer Verpackungsvorrichtung (11),
wobei alle genannten Vorrichtungen (2, 8, 9, 10, 11) auf einem einzigen Maschinenchassis (12) angeordnet sind und sich unter einer gemeinsamen Abdeckung (13) befinden.

2. Fertigungszelle nach Anspruch 1, **dadurch gekennzeichnet, daß** die Qualitätssicherungsvorrichtung (10) Mittel aufweist, mit denen Gutteile von Schlechtteilen selektiert werden können.

3. Fertigungszelle nach Anspruch 1 oder 2, **dadurch gekennzeichnet, daß** die Verpackungsvorrichtung (11) Mittel zum Führen einer Blisterverpackung (14) aufweist, in die die fertig spritzgegossenen Teile lageorientiert eingebracht werden.

4. Fertigungszelle nach einem der Ansprüche 1 bis 3, **dadurch gekennzeichnet, daß** die Abdeckung (13) durch Anschluß an Filter- und Ventilatorelemente Reinraumverhältnisse ermöglicht.

## Claims

1. Manufacturing cell (1) for injection moulding of small and miniature parts consisting of
- an injection-moulding device (2) having a plastic plastifying and injection device (3) and an injection-moulding die (5), wherein the injection-moulding die (5) consists of a fixed die half (6) and at least one displaceable die half (7),
- a device (8) for displacing and/or rotating the at least one displaceable die half (7), with which the latter may be brought alternately from the injection position to a removal position,
- a removal device (9) for finally shaped injection-moulded parts, which removes the finished injection-moulded parts from the die half (7) situated in the removal position,
- a quality-assurance device (10) and
- a packaging device (11),
wherein all said devices (2, 8, 9, 10, 11) are arranged on a single machine chassis (12) and are situated under a common cover (13).

2. Manufacturing cell according to claim 1, **characterised in that** the quality-assurance device (10) has means, with which good parts may be selected from poor parts.

3. Manufacturing cell according to claim 1 or 2, **characterised in that** the packaging device (11) has means for supplying blister packaging (14), into which the finally injection-moulded parts are introduced in position-orientated manner.

4. Manufacturing cell according to one of claims 1 to 3, **characterised in that** the cover (13) facilitates clean-room conditions by connection to filter and ventilator elements.

## Revendications

1. Cellule de fabrication (1) pour le moulage par injection de petites et très petites pièces, constituée de
un dispositif de moulage par injection (2) comprenant un dispositif de plastification et d'injection de plastique (3) et un moule d'injection (5), le moule d'injection (5) étant constitué d'une partie fixe (6) et d'au moins une partie mobile (7),
un dispositif (8) pour translater et/ou tourner la ou les parties mobiles (7) du moule, celle(s)-ci pouvant être déplacée(s) alternativement de la position d'injection à une position de démoulage,
un dispositif de démoulage (9) pour les pièces moulées qui enlève celles-ci de la partie (7) du moule se trouvant en position de démoulage,
un dispositif d'assurance de la qualité (10) et
un dispositif d'emballage,
tous les dispositifs précités (2, 8, 9, 10, 11) étant placés sur un châssis unique de machine (12) et se trouvant sous une couverture commune (13).

2. Cellule de fabrication selon la revendication 1, **caractérisée par le fait que** le dispositif d'assurance de la qualité (10) présente des moyens qui permettent de sélectionner les pièces bonnes.

3. Cellule de fabrication selon l'une des revendications 1 et 2, **caractérisée par le fait que** le dispositif d'emballage (11) présente des moyens de conduite d'un blister (14) dans lequel les pièces moulées sont introduites orientées.

4. Cellule de fabrication selon l'une des revendications 1 à 3, **caractérisée par le fait que** la couverture (13) permet des conditions d'espace propre par raccordement à des éléments de filtration et de ventilation.
